# EUROPEAN PATENT APPLICATION

(11) **EP 2 469 864 A2**
(43) Date of publication of application: **27.06.2012**
(21) Application number: 11183777.9
(22) Date of filing: 04.10.2011
(51) Int. Cl.: H04N 13/00, H04N 13/04

(54) **Image processing apparatus**

(30) Priority: 21.12.2010 JP 2010284805
(71) Applicant: Kabushiki Kaisha Toshiba, Tokyo 105-8001 (JP)
(72) Inventor: Yamada, Masahiro, Tokyo, 105-8001 (JP); Wang, Mushan, Tokyo, 105-8001 (JP)
(74) Representative: HOFFMANN EITLE

(57) **Abstract**

An image processing apparatus according to an embodiment includes: a parallax image rearrangement module configured to rearrange parallax image components respectively included in a plurality of parallax images and generate an image for three-dimensional image display having a plurality of pixels for three-dimensional image respectively including parallax image components of different parallax images; a warning message setting module configured to set a warning message; and a compounding module configured to generate a compounded image by compounding at least one of a parallax image component of a parallax image corresponding to an image shot by a camera disposed on a left side of a subject as one faces the subject and a parallax image component of a parallax image corresponding to an image shot by a camera disposed on a right side of the subject as one faces the subject, which are adjacent in a pixel for three-dimensional image display, with the warning message.

## Description

### FIELD

Embodiments of the present invention relate generally to an image processing apparatus.

### BACKGROUND

Auto three-dimensional image display apparatuses (hereafter also referred to as "three-dimensional image display apparatuses") which make it possible to view a three-dimensional image without glasses have a structure in which exit pupils represented by a lens array are disposed on a front face of a flat panel display (FPD) represented by a liquid crystal display device (LCD). The exit pupils are disposed at constant intervals, and a plurality of FPD pixels are assigned to each exit pupil. A plurality of pixels assigned to each exit pupil is herein referred to as pixel group. The exit pupil corresponds to a pixel of the three-dimensional image display apparatus, and a pixel seen via the exit pupil is changed over according to the viewing location. In other words, the pixel group behaves as a three-dimensional image displaying pixel which changes in pixel information according to the viewing location.

In the three-dimensional image display apparatus having such a configuration, pixels on the FPD are finite. Therefore, there is a limitation in the number of pixels forming the pixel group. Therefore, it cannot be avoided that the range (viewing zone) in which a three-dimensional image can be viewed is limited. In addition, if a viewer deviates from the viewing zone to the left or right, it cannot be avoided to view a parallax image of a pixel group corresponding to an exit pupil which is adjacent to the original exit pupil. Since light rays viewed by a viewer at this time is a three-dimensional image formed by light rays passed through an exit pupil adjacent to the original exit pupil, the light ray direction does not coincide with parallax information and distortion is contained. Since the parallax image is changed over according to a movement of the viewing location, however, the rays are also seen as a three-dimensional image even in this case. In some cases, therefore, a zone where the three-dimensional image (quasi image) containing the distortion is seen may be called side lobe.

In a transitional zone from a proper viewing zone to the side lobe, parallax images on both sides of a boundary between pixel groups are seen in a state in which the arrangement of parallaxes is inverted. It is known that, consequently, a phenomenon called pseudoscopy occurs and an image inverted in unevenness is viewed. Or parallax images on both sides of the boundary between pixel groups are seen at the same time. It is known that consequently videos to be seen at viewpoints which are originally different are seen as overlapped images, resulting in multiple images.

As one of countermeasures against the problems described above caused by the quasi image, a known technique is to inform the viewer that the side lobe is not a proper image by, for example, displaying some warning image in a transitional zone from the viewing zone to a side lobe, so that the viewer can recognize that the image is not a proper one even though the sense of incongruity cannot be reduced.

### BRIEF DESCRIPTION OF THE DRAWINGS

FIG. 1 is a block diagram showing an image processing apparatus according to a first embodiment;
FIG. 2 is a diagram showing multiple parallax images used in the first embodiment;
FIGS. 3(a) to 3(i) are diagrams showing pixels for a three-dimensional image rearranged by a parallax image rearrangement circuit in the first embodiment;
FIG. 4 is a diagram showing a case where the pixels for the three-dimensional image shown in FIGS. 3 are displayed on a display panel;
FIGS. 5(a) to 5(i) are diagrams showing the pixels for a three-dimensional image with warning messages compounded; and
FIG. 6 is a block diagram showing an image processing apparatus according to a second embodiment.

### DETAILED DESCRIPTION

An image processing apparatus according to an embodiment includes: a parallax image rearrangement module configured to rearrange parallax image components respectively included in a plurality of parallax images and generate an image for three-dimensional image display having a plurality of pixels for three-dimensional image respectively including parallax image components of different parallax images; a warning message setting module configured to set a warning message; and a compounding module configured to generate a compounded image by compounding at least one of a parallax image component of a parallax image corresponding to an image shot by a camera disposed on a left side of a subject as one faces the subject and a parallax image component of a parallax image corresponding to an image shot by a camera disposed on a right side of the subject as one faces the subject, which are adjacent in a pixel for three-dimensional image display, with the warning message.

Hereafter, embodiments of an image processing apparatus according to the present invention will be described more specifically with reference to the drawings.

### (First Embodiment)

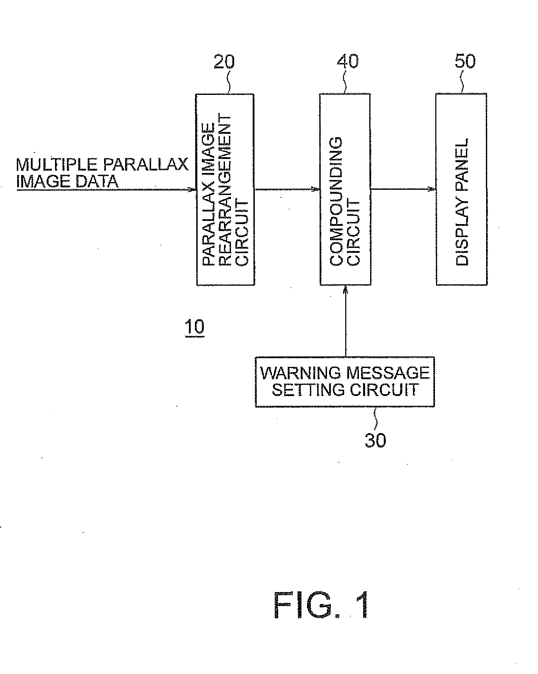

An image processing apparatus according to a first embodiment is shown in FIG. 1. The image processing apparatus according to this embodiment includes an image processing unit 10 and a display panel 50. The display panel 50 includes a display unit (not shown) having pixels arranged in a matrix form. The display panel 50 is a plane display panel such as, for example, a liquid crystal display panel or a plasma display panel. In addition, the display panel 50 includes an optical plate (not shown) which is disposed to be opposed to the display unit and which has a plurality of exit pupils that control light rays from the pixels described above. Generally, the optical plate is also called a parallax barrier. Each of exit pupils in the optical plate controls light rays to cause a different image to be seen according to an angle even from the same location. Specifically, when providing only lateral disparity (horizontal disparity), a slit sheet having a plurality of slits or a lenticular sheet (cylindrical lens array) is used. When including up-down disparity (vertical disparity) as well, a pinhole array or a fly eye lens array is used. In other words, a slit in the slit sheet, a cylindrical lens in the cylindrical lens array, a pin hole in the pin hole array, or a fly eye lens in the fly eye lens array forms each exit pupil. By the way, in the present embodiment and a second embodiment described later, the display panel 50 includes the optical plate having a plurality of exit pupils. However, a display panel which generates parallax barriers electronically by using a transmission type liquid crystal display device or the like and which performs variable control on the shape or position of the barrier pattern electronically may also be used. Any display panel may be used as long as an image for three-dimensional image display can be displayed.

The image processing unit 10 includes a parallax image rearrangement circuit 20, a warning message setting circuit 30, and a compounding circuit 40. The parallax image rearrangement circuit 20 rearranges multiple parallax image data which are input thereto to obtain an image for three-dimensional image display to be displayed on the display panel 50. Each of pixels which form the image for three-dimensional image display corresponds to one exit pupil, and has parallax image components of different parallax images. For example, if multiple parallax images are formed of nine parallax images, i.e., #0 parallax image to #9 parallax image, then a pixel which forms an image for three-dimensional image display includes parallax image components respectively of #0 parallax image to #9 parallax image. The warning message setting circuit 30 sets a warning message to be displayed on the display panel 50. The warning message may be characters or may be an image. Furthermore, the warning message may be previously set or may be adapted to be changed by a viewer. The compounding circuit 40 compounds an image for three-dimensional image display with a warning message which has been set by the warning message setting circuit 30, and sends the resultant image for display to the display panel 50, causing the display panel 50 to display a three-dimensional image.

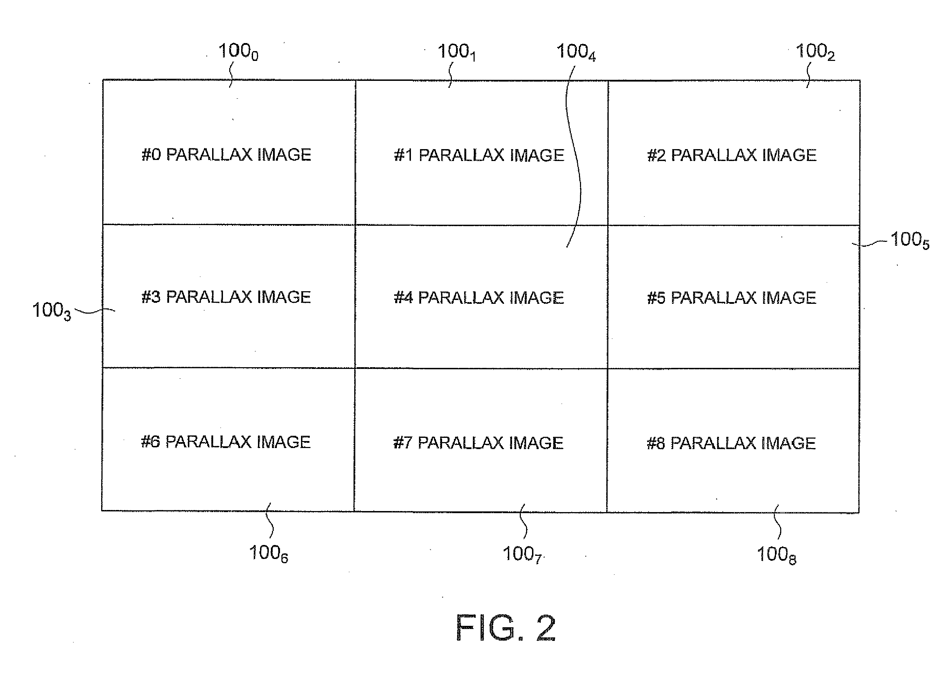

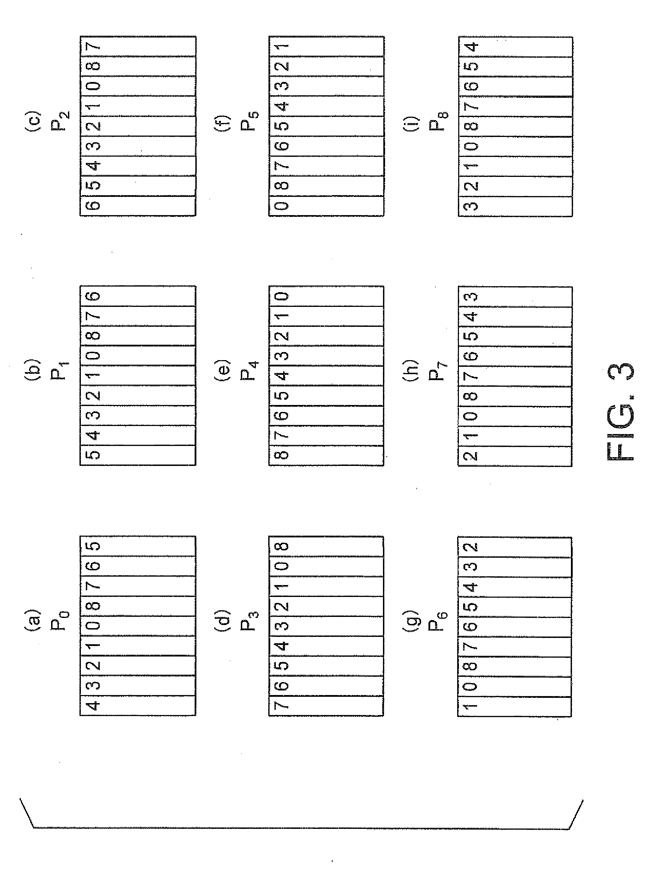

The multiple parallax images which are input to the parallax image rearrangement circuit 20 and pixels which form an image for three-dimensional image display rearranged by the parallax image rearrangement circuit 20 will now be described with reference to FIGS. 2 and 3.

Multiple parallax images which are input to the parallax image rearrangement circuit 20 are shown in FIG. 2. The present embodiment will be described by taking nine parallax images as an example of the multiple parallax images. However, the embodiment is not restricted thereto. Nine parallax images formed of #0 parallax image 100₀ to #8 parallax image 100₈ are input to the parallax image rearrangement circuit 20. Each of these nine parallax images 100₀ to 100₈ is an image having the same size, for example, 1280 by 720 pixels (which are not sub-pixels such as R (red), G (green) and B (blue) sub-pixels).

And these nine parallax images 100₀ to 100₈ are images equivalent to images (camera images) obtained by shooting a subject with nine cameras from a constant distance (viewing distance). The #0 parallax image 100₀ is an image shot by a camera disposed at the leftmost end when facing the subject. The #8 parallax image 100₈ is an image shot by a camera disposed at the rightmost end when facing the subject. The #i parallax image 100ᵢ (where i is an arbitrary integer in the range of 1 to 7) is an image shot by the ith camera from the leftmost end among seven cameras disposed between the camera disposed at the leftmost end when facing the subject and the camera at the rightmost end when facing the subject.

An image for three-dimensional image display obtained by rearranging these nine parallax images 100₀ to 100₈ in the parallax image rearrangement circuit 20 is formed of pixels P₀ to P₈ of nine kinds for three-dimensional image display. These pixels P₀ to P₈ of nine kinds are shown in FIG. 3(a) to 3(i), respectively. In other words, each pixel is formed of parallax image components of different parallax images. A number given to the parallax image component indicates a number of a parallax image which includes the parallax image component. For example, a parallax image component 4 at the left end of the pixels P₀ represents a parallax image component of the #4 parallax image 100₄. A parallax image component 3 adjacent to the parallax image component 4 represents a parallax image component extracted from the #3 parallax image 100₃.

A parallax image component 2 adjacent to the parallax image component 3 in the pixel P₀ represents a parallax image component extracted from the #2 parallax image 100₂. A parallax image component 1 adjacent to the parallax image component 2 represents a parallax image component extracted from the #1 parallax image 100₁.

A parallax image component 0 adjacent to the parallax image component 1 in the pixel P₀ represents a parallax image component extracted from the #0 parallax image 100₀. A parallax image component 8 adjacent to the parallax image component 0 represents a sixth parallax image component extracted from the #8 parallax image 100₈.

A parallax image component 7 adjacent to the parallax image component 8 in the pixel P₀ represents a parallax image component extracted from the #7 parallax image 100₇. A parallax image component 6 adjacent to the parallax image component 7 represents a parallax image component extracted from the #6 parallax image 100₆.

A parallax image component 5 adjacent to the parallax image component 6 in the pixel P₀ represents a parallax image component extracted from the #5 parallax image 100₅.

In other words, the pixel P₀ has a configuration obtained by arranging parallax image components respectively extracted from #4 parallax image 100₄, #3 parallax image 100₃, #2 parallax image 100₂, #1 parallax image 100₁, #0 parallax image 100₀, #8 parallax image 100₈, #7 parallax image 100₇, #6 parallax image 100₆, and #5 parallax image 100₅ in the cited order.

In the same way, the pixel P₁ has a configuration obtained by arranging parallax image components respectively extracted from the #5 parallax image 100₅, #4 parallax image 100₄, #3 parallax image 100₃, #2 parallax image 100₂, #1 parallax image 100₁, #0 parallax image 100₀, #8 parallax image 100₈, #7 parallax image 100₇, and #6 parallax image 100₆ in the cited order.

In the same way, the pixel P₂ has a configuration obtained by arranging parallax image components respectively extracted from the #6 parallax image 100₆, #5 parallax image 100₅, #4 parallax image 100₄, #3 parallax image 100₃, #2 parallax image 100₂, #1 parallax image 100₁, #0 parallax image 100₀, #8 parallax image 100₈, and #7 parallax image 100₇ in the cited order.

In the same way, the pixel P₃ has a configuration obtained by arranging parallax image components respectively extracted from the #7 parallax image 100₇, #6 parallax image 100₆, #5 parallax image 100₅, #4 parallax image 100₄, #3 parallax image 100₃, #2 parallax image 100₂, #1 parallax image 100₁, #0 parallax image 100₀, and #8 parallax image 100₈ in the cited order.

In the same way, the pixel P₄ has a configuration obtained by arranging parallax image components respectively extracted from the #8 parallax image 100₈, #7 parallax image 100₇, #6 parallax image 100₆, #5 parallax image 100₅, #4 parallax image 100₄, #3 parallax image 100₃, #2 parallax image 100₂, #1 parallax image 100₁, and #0 parallax image 100₀ in the cited order.

In the same way, the pixel P₅ has a configuration obtained by arranging parallax image components respectively extracted from the #0 parallax image 100₀, #8 parallax image 100₈, #7 parallax image 100₇, #6 parallax image 100₆, #5 parallax image 100₅, #4 parallax image 100₄, #3 parallax image 100₃, #2 parallax image 100₂, and #1 parallax image 100₁ in the cited order.

In the same way, the pixel P₆ has a configuration obtained by arranging parallax image components respectively extracted from the #1 parallax image 100₁, #0 parallax image 100₀, #8 parallax image 100₈, #7 parallax image 100₇, #6 parallax image 100₆, #5 parallax image 100₅, #4 parallax image 100₄, #3 parallax image 100₃, and #2 parallax image 100₂ in the cited order.

In the same way, the pixel P₇ has a configuration obtained by arranging parallax image components respectively extracted from the #2 parallax image 100₂, #1 parallax image 100₁, #0 parallax image 100₀, #8 parallax image 100₈, #7 parallax image 100₇, #6 parallax image 100₆, #5 parallax image 100₅, #4 parallax image 100₄, and #3 parallax image 100₃ in the cited order.

In the same way, the pixel P₈ has a configuration obtained by arranging parallax image components respectively extracted from the #3 parallax image 100₃, #2 parallax image 100₂, #1 parallax image 100₁, #0 parallax image 100₀, #8 parallax image 100₈, #7 parallax image 100₇, #6 parallax image 100₆, #5 parallax image 100₅, and #4 parallax image 100₄ in the cited order.

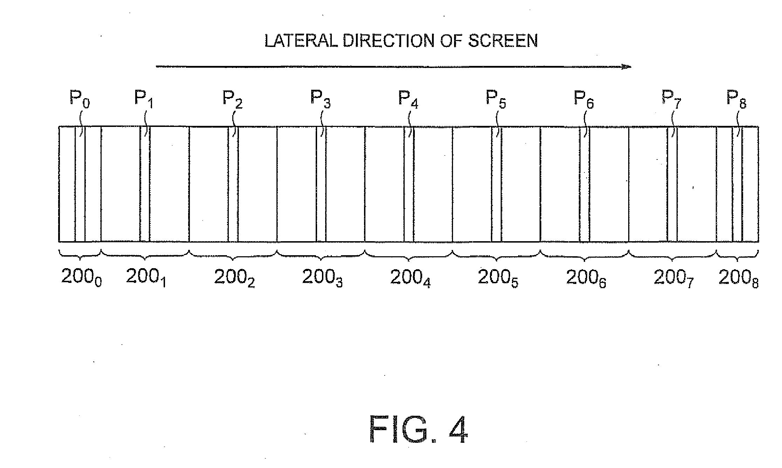

An image for three-dimensional image display obtained by rearrangement performed in the parallax image rearrangement circuit 20 is shown in FIG. 4. This image has a configuration in which nine image areas 200₀ to 200₈ arranged in the cited order. In each image area 200ᵢ (i = 0, *···,* 8), a plurality of pixels Pᵢ of the same kind are arranged in a column direction (lateral direction) of a display screen of the display panel. The image area 200₀ and the image area 200₈ disposed at both ends are formed of the same number of pixels. The image areas 200₁ to 200₇ are formed of the same number of pixels. However, the number of each of the image areas 200₁ to 200₇ is at least the number of each of the image areas 200₀ and 200₈. In other words, when mᵢ represents the number of the pixel Pi in the pixel area 200ᵢ (i = 0, ···, 8), it follows that m₀ = m_{8,} m₁ = m₂ = m₃ = m₄ = m₅ = m₆ = m₇ and m₀ ≤ mⱼ (j = 1, ···, 7).

The *j*th (where j ≤ m₀) pixel P₀ from the left end in the image area 200₀ is an image obtained by extracting the jth parallax image components from the left end respectively in the #4 parallax image 100₄, the #3 parallax image 100₃, the #2 parallax image 100₂, the #1 parallax image 100₁, the #0 parallax image 100₀, the #8 parallax image 100₈, #7 parallax image 100₇, the #6 parallax image 100₆, and the #5 parallax image 100₅ shown in FIG. 2 and arranging the extracted *j*th parallax image components.

The *j*th (where j ≤ m₁) pixel P₁ from the left end in the image area 200₁ is an image obtained by extracting the (m₀ + j)-th parallax image components from the left end respectively in the #5 parallax image 100₅, the #4 parallax image 100₄, the #3 parallax image 100₃, the #2 parallax image 100₂, the #1 parallax image 100₁, the #0 parallax image 100₀, the #8 parallax image 100₈, #7 parallax image 100₇ and the #6 parallax image 100₆ shown in FIG. 2 and arranging the extracted (m₀ + j)-th parallax image components. By the way, the jth (where 1 ≤ j ≤ m₁) pixel P₁ from the left end in the image area 200₁ is the (m₀ + j)-th pixel from the left end in the image area 200₀.

The *j*th (where j ≤ m₂) pixel P₂ from the left end in the image area 200₂ is an image obtained by extracting the (m₀ + m₁ + j)-th parallax image components from the left end respectively in the #6 parallax image 100₆, the #5 parallax image 100₅, the #4 parallax image 100₄, the #3 parallax image 100₃, the #2 parallax image 100₂, the #1 parallax image 100₁, the #0 parallax image 100₀, the #8 parallax image 100₈ and #7 parallax image 100₇ shown in FIG. 2 and arranging the extracted (m₀ + m₁ + j)-th parallax image components. By the way, the *j*th (where 1 ≤ j ≤ m₂) pixel P₂ from the left end in the image area 200₂ is the (m₀ + m₁ + j)-th pixel from the left end in the image area 200₀.

The *j*th (where j ≤ m₃) pixel P₃ from the left end in the image area 200₃ is an image obtained by extracting the (m₀ + m₁ + m₂ + j)-th parallax image components from the left end respectively in the #7 parallax image 100₇, the #6 parallax image 100₆, the #5 parallax image 100₅, the #4 parallax image 100₄, the #3 parallax image 100₃, the #2 parallax image 100₂, the #1 parallax image 100₁, the #0 parallax image 100₀ and the #8 parallax image 100₈ shown in FIG. 2 and arranging the extracted (m₀ + m₁ + m₂ + j)-th parallax image components. By the way, the *j*th (where 1 ≤ j ≤ m₃) pixel P₃ from the left end in the image area 200₃ is the (m₀ + m₁ + m₂ + j)-th pixel from the left end in the image area 200₀.

The *j*th (where j ≤ m₄) pixel P₄ from the left end in the image area 200₄ is an image obtained by extracting the (m₀ + m₁ + m₂ + m₃ + j)-th parallax image components from the left end respectively in the #8 parallax image 100₈, the #7 parallax image 100₇, the #6 parallax image 100₆, the #5 parallax image 100₅, the #4 parallax image 100₄, the #3 parallax image 100₃, the #2 parallax image 100₂, the #1 parallax image 100₁ and the #0 parallax image 100₀ shown in FIG. 2 and arranging the extracted (m₀ + m₁ + m₂ + m₃ + j)-th parallax image components. By the way, the jth (where 1 ≤ j ≤ m₄) pixel P₄ from the left end in the image area 200₄ is the (m₀ + m₁ + m₂ + m₃ + j)-th pixel from the left end in the image area 200₀.

The *j*th (where j ≤ m₅) pixel P₅ from the left end in the image area 200₅ is an image obtained by extracting the (m₀ + m₁ + m₂ + m₃ + m₄ + j)-th parallax image components from the left end respectively in the #0 parallax image 100₀, the #8 parallax image 100₈, the #7 parallax image 100₇, the #6 parallax image 100₆, the #5 parallax image 100₅, the #4 parallax image 100₄, the #3 parallax image 100₃, the #2 parallax image 100₂ and the #1 parallax image 100₁ shown in FIG. 2 and arranging the extracted (m₀ + m₁ + m₂ + m₃ + m₄ + j)-th parallax image components. By the way, the *j*th (where 1 ≤ j ≤ m₅) pixel P₅ from the left end in the image area 200₅ is the (m₀ + m₁ + m₂ + m₃ + m₄ + j)-th pixel from the left end in the image area 200₀.

The *j*th (where j ≤ m₆) pixel P₆ from the left end in the image area 200₆ is an image obtained by extracting the (m₀ + m₁ + m₂ + m₃ + m₄ + m₅ + j)-th parallax image components from the left end respectively in the #1 parallax image 100₁, the #0 parallax image 100₀, the #8 parallax image 100₈, the #7 parallax image 100₇, the #6 parallax image 100₆, the #5 parallax image 100₅, the #4 parallax image 100₄, the #3 parallax image 100₃ and the #2 parallax image 100₂ shown in FIG. 2 and arranging the extracted (m₀ + m₁ + m₂ + m₃ + m₄ + m₅ + j)-th parallax image components. By the way, the jth (where j ≤ m₆) pixel P₆ from the left end in the image area 200₆ is the (m₀ + m₁ + m₂ + m₃ + m₄ + m₅ + j)-th pixel from the left end in the image area 200₀.

The *j*th (where j ≤ m₇) pixel P₇ from the left end in the image area 200₇ is an image obtained by extracting the (m₀ + m₁ + m₂ + m₃ + m₄ + m₅ + m₆ + j)-th parallax image components from the left end respectively in the #2 parallax image 100₂, the #1 parallax image 100₁, the #0 parallax image 100₀, the #8 parallax image 100₈, the #7 parallax image 100₇, the #6 parallax image 100₆, the #5 parallax image 100₅, the #4 parallax image 100₄ and the #3 parallax image 100₃ shown in FIG. 2 and arranging the extracted (m₀ + m₁ + m₂ + m₃ + m₄ + m₅ + m₆ + j)-th parallax image components. By the way, the *j*th (where j ≤ m₇) pixel P₇ from the left end in the image area 200₇ is the (m₀ + m₁ + m₂ + m₃ + m₄ + m₅ + m₆ + j)-th pixel from the left end in the image area 200₀.

The *j*th (where j ≤ m₈) pixel P₈ from the left end in the image area 200₈ is an image obtained by extracting the (m₀ + m₁ + m₂ + m₃ + m₄ + m₅ + m₆ + m₇ + j)-th parallax image components from the left end respectively in the #3 parallax image 100₃, the #2 parallax image 100₂, the #1 parallax image 100₁, the #0 parallax image 100₀, the #8 parallax image 100₈, the #7 parallax image 100₇, the #6 parallax image 100₆, the #5 parallax image 100₅ and the #4 parallax image 100₄ shown in FIG. 2 and arranging the extracted (m₀ + m₁ + m₂ + m₃ + m₄ + m₅ + m₆ + m₇ + j)-th parallax image components. By the way, the *j*th (where j ≤ m₈) pixel P₈ from the left end in the image area 200₈ is the (m₀ + m₁ + m₂ + m₃ + m₄ + m₅ + m₆ + m₇ + j)-th pixel from the left end in the image area 200₀.

In other words, the *j*th (where 1 ≤ j ≤ m₀ + m₁ + m₂ + m₃ + m₄ + m₅ + m₆ + m₇ + m₈) pixel from the left end of the image for three-dimensional image display, i.e., the *j*th pixel from the left end of the image area 200₀, includes the jth parallax image components from the left end respectively in the nine parallax images 100₀ to 100₈.

In addition, as for the arrangement order of parallax image components of the pixel Pi in each image area 200ᵢ (i = 0, ···, 8) of an image for three-dimensional image display, disposition is performed to move parallax image components respectively of parallax images for right eye, for example, #8 parallax image, #7 parallax image, #6 parallax image and #5 parallax image in the direction from the right of the pixel Pᵢ to the center in the cited order, as the arrangement position of the pixel Pᵢ proceeds from the image area 200₄ in the center of the display panel to the left when facing the display panel, and disposition is performed to move parallax image components respectively of parallax images for left eye, for example, #0 parallax image, #1 parallax image, #2 parallax image and #3 parallax image in the direction from the left of the pixel Pᵢ to the center in the cited order, as the arrangement position of the pixel Pᵢ proceeds from the image area 200₄ in the center of the display panel to the right when facing the display panel. Such a method for generating an image for three-dimensional image display by rearranging a plurality of parallax images is disclosed in, for example, JP-A-2009-239665 (KOKAI).

Furthermore, each of the pixels P₀ to P₈ constituted as described above includes parallax image components respectively of the parallax images 100ᵢ (i = 0, ···, 8). If, in each pixel Pᵢ (i = 0, ···, 8), adjacent parallax image components differ by only one in number indicating their parallax images, original parallax images including those parallax image components are images shot by adjacent cameras and consequently the original parallax images have resemblance. As described above, however, the parallax image 100₀ is an image shot by a camera disposed at the leftmost end and the parallax image 100₈ is an image shot by a camera disposed at the rightmost end. In each pixel Pᵢ (i = 0, ···, 8), therefore, there is a possibility that a quasi image, pseudoscopy or multiple images will be displayed in display areas of a three-dimensional image corresponding to areas of the display panel where parallax image components of these parallax images 100₀ and 100₈ are disposed to be adjacent to each other.

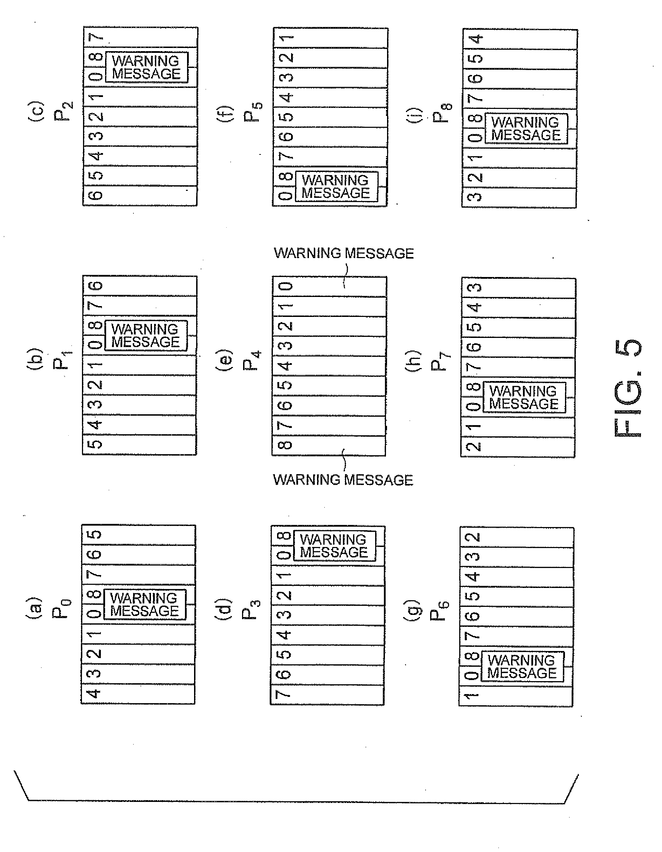

Therefore, the present embodiment has a configuration in which a warning message set by the warning message setting circuit 30 is inserted into the above-described areas. The insertion of the warning message is performed by the compounding circuit 40. The compounding circuit 40 compounds the pixels P₀ to P₈ for three-dimensional image display with the warning message, and the pixels P₀ to P₈ for three-dimensional image display after the compounding are shown in FIG. 5. In the pixels P₀ to P₈ obtained after the compounding and shown in FIG. 5, the warning message is inserted into areas where parallax image components respectively of the parallax image 100₀ shot by the camera at the leftmost end and the parallax image 100₈ shot by the camera at the rightmost end are disposed to be adjacent to each other.

Owing to such a configuration, it is possible to prevent a quasi image, pseudoscopy or multiple images from being displayed.

In general, when laminating the optical plate onto a flat panel display in the three-dimensional image display apparatus, it is necessary to align each exit pupil with a pixel group of the flat panel display which displays pixels for three-dimensional image with a corresponding precision. Therefore, if the precision at the time of laminating is poor, it is likely that a parallax image component of another pixel will be mixed in a pixel for three-dimensional image and it is difficult to maintain the same quality, resulting in a problem of a lowered throughput in manufacturing the image display device.

In the present embodiment, however, the warning message is inserted into areas where parallax image components respectively of the parallax image 100₀ shot by the camera at the leftmost end and the parallax image 100₈ shot by the camera at the rightmost end are disposed to be adjacent to each other. Therefore, the quantity of light leak in a viewing zone where the warning message is not seen can be reduced. As a result, the three-dimensional image can be made clearer and reduction of the throughput can be suppressed.

By the way, it is not necessary to insert all of the warning messages in the pixels in the pixel areas, but the warning messages may be inserted partially.

It is now supposed that the pixels P₀ to P₈ for three-dimensional image display are arranged in the lateral direction on the display screen of the display panel as shown in FIG. 4. With the arrangement, in pixels included in the arranged pixels P₀ to P₈ and disposed on the left side of a center line in the lateral direction of the display screen, the warning message may be inserted into a parallax image component of the #8 parallax image 100₈. In pixels disposed on the right side of the center line, the warning message may be inserted into a parallax image component of the #0 parallax image 100₀. The quantity of light leak can be decreased by inserting a warning message in one of the parallax image components in this way, as compared with the case where a warning message is inserted into both parallax image components.

Furthermore, the message inserted into the parallax image component of the #8 parallax image 100₈ can be made different from the message inserted into the parallax image component of the #0 parallax image 100₀.

The first embodiment has been described by taking the case where the multiple parallax images are nine parallax images and the image for three-dimensional image display is formed of nine image areas 200₀ to 200₈ as an example. However, the first embodiment is not restricted to this example. If the multiple parallax images are n parallax images, where n is an integer of at least 3, then the image for three-dimensional image display may be formed of i image areas, where i is an integer in the range between 3 and n.

### (Second Embodiment)

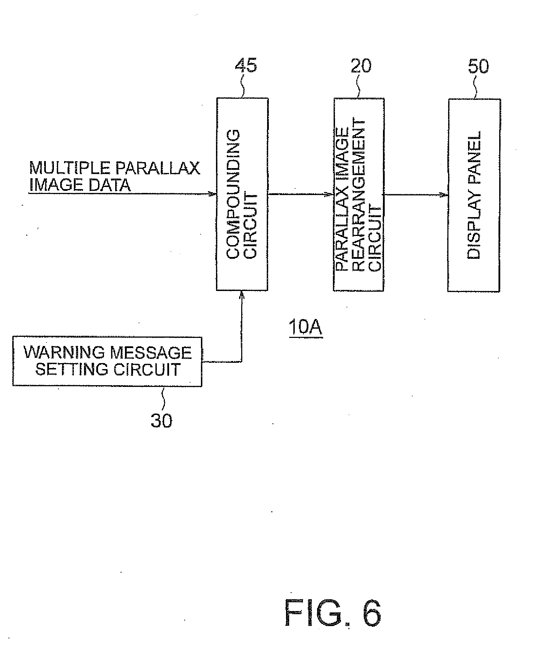

An image processing apparatus according to a second embodiment is shown in FIG. 6. In the first embodiment, the warning message is inserted after parallax image components of parallax images are rearranged and an image for three-dimensional image is generated. In the image processing apparatus according to the second embodiment, the warning message is inserted into the parallax image components before the rearrangement. In other words, the second embodiment has a configuration in which the warning message is inserted into parallax images.

The image processing apparatus according to the second embodiment has a configuration obtained by replacing the image processing unit 10 in the first embodiment with an image processing unit 10A. The image processing unit 10A includes a warning message setting circuit 30 and a compounding circuit 45. The warning message setting circuit 30 is the same as the warning message setting circuit 30 described in the first embodiment.

The compounding circuit 45 compounds input multiple parallax images with a warning message, and generates multiple parallax images with the warning message compounded. As appreciated from FIG. 5, in the first embodiment, the position of the multiple parallax image components into which the warning message in the image for three-dimensional image is inserted is predetermined. As a result, in the #8 parallax image 100₈ and the #0 parallax image 100₀, the position of the multiple parallax image components into which the warning message is to be inserted is also determined before the image for three-dimensional image is generated. The compounding circuit 45 inserts a warning message into the parallax image components in these determined positions. And the parallax image rearrangement circuit 30 rearranges the parallax images with the warning message compounded to generate an image for three-dimensional image. The image for three-dimensional image which is output from the parallax image rearrangement circuit 30 has the inserted warning message, and those insertion places are the same as those shown in FIG. 5.

In the second embodiment, effects similar to those in the first embodiment can also be obtained.

While certain embodiments have been described, these embodiments have been presented by way of example only, and are not intended to limit the scope of the inventions. Indeed, the novel methods and systems described herein can be embodied in a variety of other forms; furthermore, various omissions, substitutions and changes in the form of the methods and systems described herein can be made without departing from the spirit of the inventions. The accompanying claims and their equivalents are intended to cover such forms or modifications as would fall within the scope and spirit of the inventions.

## Claims

1. An image processing apparatus comprising:
a parallax image rearrangement module configured to rearrange parallax image components respectively included in a plurality of parallax images and generate an image for three-dimensional image display having a plurality of pixels for three-dimensional image respectively including parallax image components of different parallax images;
a warning message setting module configured to set a warning message; and
a compounding module configured to generate a compounded image by compounding at least one of a parallax image component of a parallax image corresponding to an image shot by a camera disposed on a left side of a subject as one faces the subject and a parallax image component of a parallax image corresponding to an image shot by a camera disposed on a right side of the subject as one faces the subject, which are adjacent in a pixel for three-dimensional image display, with the warning message.

2. The image processing apparatus according to claim 1, further comprising a display panel which displays the compounded image.

3. The image processing apparatus according to claim 2, wherein
the plurality of pixels for three-dimensional image display are arranged in a lateral direction on a display screen of the display panel,
in pixels included in the arranged plurality of pixels for three-dimensional image display and disposed on a left side of a center line in the lateral direction of the display screen, the warning message is compounded with a parallax image component of a parallax image shot by a camera disposed on a right side of the subject as one faces the subject, and
in pixels included in the arranged plurality of pixels for three-dimensional image display and disposed on a right side of the center line, the warning message is compounded with a parallax image component of a parallax image shot by a camera disposed on a left side of the subject as ones faces the subject.

4. The image processing apparatus according to claim 1, wherein a jth pixel (where j = 1, ···) from a left end of the image for three-dimensional image display includes jth parallax image components from a left end respectively in the plurality of parallax images.

5. The image processing apparatus according to claim 4, wherein
as for an arrangement order of parallax image components in the pixel for three-dimensional image display,
disposition is performed to move parallax image components respectively of parallax images for a right eye in a direction from right of the pixel to a center as an arrangement position of the pixel proceeds from a center of a display screen of a display panel to left as one faces the panel, and
disposition is performed to move parallax image components respectively of parallax images for a left eye in a direction from left of the pixel to the center as the arrangement position of the pixel proceeds from the center of display screen of the display panel to right as one faces the panel.
